# EUROPÄISCHE PATENTSCHRIFT

(11) **EP 2 285 678 B1**
(45) Veröffentlichungstag und Bekanntmachung des Hinweises auf die Patenterteilung: **26.10.2011**
(21) Anmeldenummer: 09753609.8
(22) Anmeldetag: 06.05.2009
(51) Int. Cl.: B64D 13/00

(54) **SYSTEM ZUR VENTILATION EINES FLUGZEUGBEREICHS**
SYSTEM FOR VENTILATING AN AIRCRAFT AREA
SYSTEME DE VENTILATION D' UNE ZONE D'AVION

(30) Priorität: 30.05.2008 DE 102008025960; 30.05.2008 US 57427
(43) Veröffentlichungstag der Anmeldung: 23.02.2011
(73) Patentinhaber: Airbus Operations GmbH, 21129 Hamburg (DE)
(72) Erfinder: KELNHOFER, Jürgen, 21635 Jork (DE)
(74) Vertreter: Schicker, Silvia
(86) Internationale Anmeldenummer: PCT/EP2009/003245
(87) Internationale Veröffentlichungsnummer: WO 2009/143954

(56) Entgegenhaltungen:
- EP-A- 1 138 592
- WO-A-2005/063569
- US-A- 4 865 267

## Beschreibung

Die vorliegende Erfindung betrifft ein System zur Ventilation eines Flugzeugbereichs gemäß dem Oberbegriff des Anspruchs 1.

An Bord eines Flugzeugs gibt es verschiedene Bereiche, in denen das Überschreiten einer vorbestimmten Temperatur sowie die Entstehung eines Hitzestaus zuverlässig vermieden werden muss. Insbesondere in Flugzeugbereichen, die als Einbauraum für wärmebelastete Einrichtungen, wie zum Beispiel die Klimaaggregate oder die elektronischen Steuerkomponenten des Flugzeugs genutzt werden, muss durch eine ordnungsgemäße Ventilation dieser Bereiche sowohl im Bodenbetrieb als auch im Flugbetrieb des Flugzeugs eine ausreichende Wärmeabfuhr von den wärmebelasteten Einrichtungen gewährleistet werden. Darüber hinaus muss in beispielsweise als Einbauraum für wärmebelastete Einrichtungen genutzten Flugzeugbereichen für einen ausreichenden Luftaustausch gesorgt werden, um eine Erwärmung der Flugzeugstruktur und/oder die Bildung zündfähiger Treibstoff- und/oder Treibstoffdampfansammlungen zu verhindern.

Die DE 103 61 657, die als nächstliegender Stand der Technik betrachtet wird, A1 beschreibt ein System zur Versorgung eines Flugzeugbereichs mit Kühlluft, das einen Stauluftkanal mit einem Lufteinlass sowie einem Diffusor und einen sich parallel zu einem Teilabschnitt des Stauluftkanals erstreckenden Bypasskanal umfasst. Der Stauluftkanal mündet in eine Kühlluftsammelkammer, von der eine Versorgungsleitung eines Unpressurized Bay Ventilation (UBV)-Systems, eine Versorgungsleitung eines Sauerstofferzeugungssystems und eine Versorgungsleitung eines Inertgaserzeugungssystems abzweigen. Über die Versorgungsleitung des UBV-Systems wird einem zu belüftenden Flugzeugbereich Ventilationsluft zugeführt. In den Versorgungsleitungen des Sauerstofferzeugungssystems und des Inertgaserzeugungssystems ist dagegen jeweils ein Wärmetauscher angeordnet, der von der den Stauluftkanal durchströmenden Luft mit Kühlenergie versorgt wird.

Im Flugbetrieb des Flugzeugs baut sich in dem Stauluftkanal gegenüber dem Umgebungsdruck ein auch als Staudruck bezeichneter statischer Überdruck auf, der eine Strömung von Umgebungsluft durch den Stauluftkanal, die Kühlluftsammelkammer und die mit der Kühlluftsammelkammer verbundenen Versorgungsleitungen bewirkt. Im Bodenbetrieb des Flugzeugs sorgt dagegen ein in dem Bypasskanal angeordneter Luftverdichter für eine ausreichende Luftströmung durch den Stauluftkanal, die Kühlluftsammelkammer und die mit der Kühlluftsammelkammer verbundenen Versorgungsleitungen.

Das aus der DE 103 61 657 A1 bekannte Kühlluftversorgungssystem erfüllt die Doppelfunktion, einerseits einem zu belüftenden Flugzeugbereich Ventilationsluft zuzuführen und andererseits für eine ordnungsgemäße Kühlenergiezufuhr zu den Wärmetauschern des Sauerstofferzeugungssystems und des Inertgaserzeugungssystems zu sorgen. Die Integration der Wärmetauscher des Sauerstofferzeugungssystems und des Inertgaserzeugungssystems in das einem zu belüftenden Flugzeugbereich Ventilationsluft zuzuführende Kühlluftversorgungssystem ermöglicht somit den Verzicht auf einen separaten Stauluftkanal zur Versorgung der Wärmetauscher mit Kühlenergie. Dadurch können Gewichts- und Kostenersparnisse realisiert, der Einbauraumbedarf des Gesamtsystems reduziert und der Luftwiderstand und folglich der Treibstoffverbrauch des Flugzeugs im Flugbetrieb verringert werden.

Ein Nachteil des in der DE 103 61 657 A1 beschriebenen Kühlluftversorgungssystems besteht jedoch darin, dass aufgrund des Systemaufbaus mit einer Kühlluftsammelkammer und drei parallel zueinander mit der Kühlluftsammelkammer verbundenen Versorgungsleitungen in allen Betriebszuständen des Systems, d.h. sowohl dann, wenn sich das Flugzeug am Boden befindet als auch im Flugbetrieb des Flugzeugs, eine ordnungsgemäße Versorgung des UBV-Systems mit Ventilationsluft eine Berücksichtigung des durch die Wärmetauscher des Sauerstofferzeugungssystems und des Inertgaserzeugungssystems verursachten Druckabfalls erfordert. Folglich müssen der in dem Bypasskanal angeordnete Luftverdichter und der Lufteinlass des Stauluftkanals so dimensioniert sein, dass dem UBV-System auch im Bodenbetrieb des Flugzeugs trotz des durch die Wärmetauscher des Sauerstofferzeugungssystems und des Inertgaserzeugungssystems verursachten Druckabfalls eine ausreichende Menge Ventilationsluft zugeführt werden kann.

Der vorliegenden Erfindung liegt die Aufgabe zugrunde, ein System zur Ventilation eines Flugzeugbereichs bereitzustellen, das sowohl im Bodenbetrieb als auch im Flugbetrieb eines Flugzeugs eine zuverlässige Ventilation eines mit Ventilationsluft zu versorgenden Flugzeugbereichs gewährleistet und zusätzlich im Flugbetrieb des Flugzeugs eine ordnungsgemäße und energieeffiziente Zufuhr von Kühlenergie zu einem in das Ventilationssystem integrierten Wärmetauscher ermöglicht.

Zur Lösung dieser Aufgabe umfasst ein erfindungsgemäßes System zur Ventilation eines Flugzeugbereichs einen Stauluftkanal, der einen Lufteinlass, einen ersten Stauluftkanalzweig sowie einen parallel zu dem ersten Stauluftkanalzweig durchströmbaren zweiten Stauluftkanalzweig umfasst. Der Lufteinlass des Stauluftkanals ist vorzugsweise in gewichtssparender Art und Weise ohne Regelungsklappe ausgeführt, so dass die Menge der über den Lufteinlass in den Stauluftkanal zuführbaren Luft im Wesentlichen durch die Dimensionierung des Lufteinlasses bestimmt wird. Beispielsweise kann der Lufteinlass in Form eines sogenannten NACA-Einlasses ausgebildet sein (NACA: National Advisory Commitee for Aeronautics). Mit dem Stauluftkanal ist eine Versorgungsleitung verbunden, die dazu eingerichtet ist, dem zu ventilierenden Flugzeugbereich den Stauluftkanal durchströmende Luft zuzuführen.

Im Flugbetrieb des Flugzeugs bewirkt der sich in dem Stautuftkanal gegenüber dem Umgebungsdruck aufbauende Staudruck eine ausreichende Luftströmung durch den Stauluftkanal und in den zu ventilierenden Flugzeugbereich. Dadurch wird in dem zu ventilierenden Flugzeugbereich eine ausreichende Wärmeabfuhr von wärmebelasteten Einrichtungen gewährleistet und/oder eine Erwärmung der Flugzeugstruktur und/oder die Bildung zündfähiger Treibstoff- und/oder Treibstoffansammlungen verhindert. Im Bodenbetrieb des Flugzeugs sorgt dagegen eine in dem ersten Stauluftkanalzweig angeordnete Fördereinrichtung für eine ausreichende Luftzufuhr durch den Stauluftkanal in den zu ventilierenden Flugzeugbereich. Die Fördereinrichtung kann beispielsweise ein entsprechend dimensioniertes Gebläse oder ein Turboverdichter sein, das/der mit heißer Zapfluft von den Triebwerken des Flugzeugs angetrieben wird.

In dem zweiten Stauluftkanalzweig des erfindungsgemäßen Ventilationssystems ist ein Wärmetauscher eines mit Kühlenergie zu versorgenden Flugzeugsystems angeordnet. Der Wärmetauscher kann ein Einzelwärmetauscher, ein Doppelwärmetauscher, ein Luft-Luft-Wärmetauscher, ein Luft-Flüssigkeits-Wärmetauscher oder ein anders gestalteter Wärmetauscher sein. Wesentlich ist lediglich, dass der Wärmetauscher dazu dient, einem Flugzeugsystem von der den Stauluftkanal durchströmenden Luft bereitgestellte Kühlenergie zuzuführen. Durch die erfindungsgemäße Anordnung des Wärmetauschers in dem zweiten Stauluftkanalzweig kann die in dem ersten Stauluftkanalzweig angeordnete Fördereinrichtung unabhängig von dem durch den Wärmetauscher verursachten Druckabfall in dem Stauluftkanal betrieben werden. Mit anderen Worten, die Fördereinrichtung muss, anders als bei aus dem Stand der Technik bekannten Systemen, nicht länger dazu in der Lage sein, den durch den Wärmetauscher verursachten Druckabfall in dem Stauluftkanal zu kompensieren, um im Bodenbetrieb des Flugzeugs eine ausreichende Zufuhr von Ventilationsluft in den zu ventilierenden Flugzeugbereich zu gewährleisten. Die Fördereinrichtung kann daher deutlich kleiner und leichtgewichtiger ausgelegt werden.

Mit Hilfe des erfindungsgemäßen Ventilationssystems kann dem zu ventilierenden Flugzeugbereich sowohl im Flugbetrieb als auch im Bodenbetrieb des Flugzeugs ausreichend Ventilationsluft zugeführt werden. Darüber hinaus wird im Flugbetrieb des Flugzeugs ein zusätzliches Flugzeugsystem mit Hilfe des in dem zweiten Stauluftkanalzweig angeordneten Wärmetauschers mit Kühlenergie versorgt. Wesentlich ist dabei lediglich, dass der Wärmetauscher seine Funktionalität nur im Flugbetrieb des Flugzeugs, d.h. dann, wenn das Flugzeug eine bestimmte Mindestfluggeschwindigkeit erreicht hat und folglich auch ohne die Unterstützung durch eine Fördereinrichtung eine ausreichende Luftströmung durch den zweiten Stauluftkanalzweig gewährleistet ist, bereitstellen muss. Das Flugzeugsystem, das mit Hilfe des in dem zweiten Stauluftkanalzweig angeordneten Wärmetauschers mit Kühlenergie versorgt wird, ist daher vorzugsweise ein Flugzeugsystem, das im Bodenbetrieb des Flugzeugs keinen Kühlbedarf hat.

Durch die Integration des Wärmetauschers in den Stauluftkanal eines bestehenden Ventilationssystems können Gewichts-, Einbauraumvolumen- und Kostenersparnisse realisiert werden. Darüber hinaus kann durch den Verzicht auf einen zusätzlichen Stauluftkanal der Flugzeugwiderstand und folglich der Treibstoffverbrauch des Flugzeugs vermindert werden. Darüber hinaus ermöglicht es die Anordnung des Wärmetauschers in dem zweiten Stauluftkanalzweig Leistungseinbussen des Ventilationssystems zu vermeiden, da dem Wärmetauscher lediglich im Flugbetrieb des Flugzeugs Kühlenergie zugeführt wird. Da der Lufteinlass des Stauluftkanals in üblicher Weise so dimensioniert ist, dass im Bodenbetrieb des Flugzeugs eine ausreichende Zufuhr von Ventilationsluft in den zu ventilierenden Flugzeugbereich gewährleistet ist, ist im Flugbetrieb des Flugzeugs ohnehin ein "überschüssiger" Luftmassenstrom vorhanden. Dieser kann in energetisch optimaler Weise zur Versorgung des in dem zweiten Stauluftkanalzweig angeordneten Wärmetauschers mit Kühlenergie genutzt werden.

Wie bereits erwähnt, sollte das von dem Wärmetauscher mit Kühlenergie zu versorgende Flugzeugsystem ein Flugzeugsystem sein, das nur im Flugbetrieb des Flugzeugs ab einer bestimmten Mindestfluggeschwindigkeit des Flugzeugs Kühlbedarf hat. Beispielsweise kann das mit Kühlenergie zu versorgende Flugzeugsystem ein Sauerstofferzeugungssystem oder ein Inertgaserzeugungssystem sein. Das Inertgaserzeugungssystem kann beispielsweise dazu dienen, einem Treibstofftank des Flugzeugs zur Verringerung der Explosionsgefahr Inertgas zuzuführen.

Der erste Stauluftkanalzweig kann an einem stromabwärts des Lufteinlasses angeordneten Verzweigungspunkt von dem zweiten Stauluftkanalzweig abzweigen. An einem stromabwärts der Fördereinrichtung angeordneten Mündungspunkt kann der erste Stauluftkanalzweig wieder in den zweiten Stauluftkanalzweig münden. Der Staulufitkanal hat dann lediglich über einen Teil seiner Länge zwei parallel durchströmbare Zweige.

Vorzugsweise ist der Wärmetauscher zwischen dem Verzweigungspunkt und dem Mündungspunkt angeordnet. Durch diese Anordnung wird gewährleistet, dass die Fördereinrichtung im Bodenbetrieb des Flugzeugs unabhängig von dem von dem Wärmetauscher verursachten Druckabfall in dem Stauluftkanal betrieben werden kann, da die Fördereinrichtung die Luft nicht durch den Wärmetauscher fördern muss.

Die Versorgungsleitung des erfindungsgemäßen Ventilationssystems ist vorzugsweise stromabwärts des Mündungspunkts mit dem Stauluftkanal verbunden. Beispielsweise kann der Stauluftkanal unmittelbar in die Versorgungsleitung münden. Alternativ dazu kann die Versorgungsleitung jedoch auch von dem Stauluftkanal abzweigen.

In dem zweiten Stauluftkanalzweig kann stromaufwärts oder stromabwärts des Wärmetauschers ein Sperrventil angeordnet sein. Das Sperrventil ist dazu eingerichtet, in einer ersten Stellung den zweiten Stauluftkanalzweig zur Durchströmung freizugeben. In einer zweiten Stellung verschließt das Sperrventil dagegen den zweiten Stauluftkanalzweig. Im Flugbetrieb des Flugzeugs, wenn der zweite Stauluftkanalzweig von Luft durchströmt werden soll, um dem Wärmetauscher des mit Kühlenergie zu versorgenden Flugzeugsystems kühle Umgebungsluft zuzuführen, befindet sich das Sperrventil vorzugsweise in seiner ersten Stellung. Im Bodenbetrieb des Flugzeugs, wenn mit Hilfe der Fördereinrichtung Umgebungsluft durch den ersten Stauluftkanalzweig gefördert wird, um sie dem zu ventilierenden Flugzeugbereich zuzuführen, befindet sich das Sperrventil dagegen vorzugsweise in seiner zweiten Stellung, in der es den zweiten Stauluftkanalzweig verschließt. Dadurch wird eine Luftzirkulation zwischen dem ersten und dem zweiten Stauluftkanalzweig verhindert. Vorzugsweise sind bei dem erfindungsgemäßen Ventilationssystem der Wärmetauscher, das von dem Wärmetauscher mit Kühlenergie zu versorgende Flugzeugsystem, der Lufteinlass und der zweite Stauluftkanalzweig so ausgelegt und dimensioniert, dass die Ventilation des zu ventilierenden Flugzeugbereichs durch die Erwärmung der über den zweiten Stauluftkanalzweig zugeführten Luft beim Durchströmen des Wärmetauschers nicht beeinträchtigt wird. Dadurch wird gewährleistet, dass die Luft selbst nach dem Durchströmen des Wärmetauschers noch zur Ventilierung des zu ventilierenden Flugzeugbereichs genutzt werden kann. Beispielsweise können die oben genannten Komponenten so ausgelegt und dimensioniert sein, dass die Luft beim Durchströmen des Wärmetauschers nicht über 80°C erwärmt wird. Die hier genannte Maximaltemperatur von 80°C wird durch die Anforderungen der Flugzeugstruktur sowie des zu ventilierenden Flugzeugbereichs festgelegt. In Abhängigkeit des Strukturmaterials und der Bedingungen in dem zu ventilierenden Flugzeugbereich kann diese Temperatur jedoch auch unter oder über 80°C liegen.

Die Versorgungsleitung des erfindungsgemäßen Ventilationssystems kann einen mit einem Flügelwurzelbereich des Flugzeugs verbindbaren ersten Zweig und einen mit einer Belly Fairing des Flugzeugs verbindbaren zweiten Zweig umfassen. Das erfindungsgemäße Ventilationssystem kann dann dazu benutzt werden, zwei Flugzeugbereiche, nämlich den Flügelwurzelbereich und die Belly Fairing des Flugzeugs mit Ventilationsluft zu versorgen. Je nach Anwendung kann der mit Hilfe des erfindungsgemäßen Ventiladonssystems zu ventilierende Flugzeugbereich aber auch nur die Belly Fairing, nur ein Flügelwurzelbereich, beide Flügelwurzelbereiche oder ein anderer Flugzeugbereich sein.

Das erfindungsgemäße System zur Ventilation eines Flugzeugbereichs kann ferner einen weiteren Stauluftkanal mit einem Lufteinlass, einem ersten Stauluftkanalzweig sowie einem parallel zu dem ersten Stauluftkanatzweig durchströmbaren zweiten Stauluftkanalzweig umfassen. Der weitere Stauluftkanal kann mit einer weiteren Versorgungsleitung verbunden sein, die dazu eingerichtet ist, einem zu ventilierenden Flugzeugbereich den weiteren Stauluftkanal durchströmende Luft zuzuführen. Der zu ventilierende Flugzeugbereich kann der Flugzeugbereich sein, der bereits von dem Stauluftkanal mit Ventilationsluft versorgt wird. Alternativ dazu kann der von dem weiteren Stauluftkanal mit Ventilationsluft versorgte zu ventilierende Flugzeugbereich jedoch auch ein weiterer Flugzeugbereich sein. In dem ersten Stauluftkanalzweig des weiteren Stauluftkanals kann eine weitere Fördereinrichtung angeordnet sein, die im Bodenbetrieb des Flugzeugs Luft durch den ersten Stauluftkanalzweig fördert.

Ferner kann in dem zweiten Stauluftkanalzweig des weiteren Stauluftkanals ein weiterer Wärmetauscher eines mit Kühlenergie zu versorgenden Flugzeugsystems angeordnet sein. Alternativ dazu kann jedoch auch auf die Anordnung eines weiteren Wärmetauschers in dem zweiten Stauluftkanalzweig des weiteren Stauluftkanals verzichtet werden. Der weitere Wärmetauscher kann das gleiche Flugzeugsystem mit Kühlenergie versorgen wie der in dem zweiten Stauluftkanalzweig des Stauluftkanals angeordnete Wärmetauscher. Alternativ dazu kann der weitere Wärmetauscher jedoch auch dazu dienen, ein weiteres Flugzeugsystem mit Kühlenergie zu versorgen.

Der erste Stauluftkanalzweig des weiteren Stauluftkanals kann an einem stromabwärts des Lufteinlasses des weiteren Stauluftkanals angeordneten Verzweigungspunkt von dem zweiten Stauluftkanalzweig des weiteren Stauluftkanals abzweigen. An einem stromabwärts der weiteren Fördereinrichtung angeordneten Mündungspunkt kann der erste Stauluftkanalzweig des weiteren Stauluftkanals wieder in den zweiten Stauluftkanalzweig des weiteren Stauluftkanals münden. Der weitere Stauluftkanal hat dann, ebenso wie der Stauluftkanal lediglich über einen Teil seiner Länge zwei parallel durchströmbare Zweige. Vorzugsweise ist der weitere Wärmetauscher zwischen dem Verzweigungspunkt und dem Mündungspunkt angeordnet.

Die weitere Versorgungsleitung des erfindungsgemäßen Ventilationssystems ist vorzugsweise stromabwärts des Mündungspunkts mit dem weiteren Stauluftkanal verbunden. Beispielsweise kann der weitere Stauluftkanal unmittelbar in die weitere Versorgungsleitung münden. Alternativ dazu kann die weitere Versorgungsleitung jedoch auch von dem weiteren Stauluftkanal abzweigen.

In dem zweiten Stauluftkanalzweig des weiteren Stauluftkanals kann stromaufwärts oder stromabwärts des weiteren Wärmetauschers ein Sperrventil angeordnet sein. Das Sperrventil ist dazu eingerichtet, in einer ersten Stellung den zweiten Stauluftkanalzweig des weiteren Stauluftkanals zur Durchströmung freizugeben. In einer zweiten Stellung verschließt das Sperrventil dagegen den zweiten Stauluftkanalzweig des weiteren Stauluftkanals. Im Flugbetrieb des Flugzeugs, wenn der zweite Stauluftkanalzweig des weiteren Stauluftkanals von Luft durchströmt werden soll, um dem weiteren Wärmetauscher des mit Kühlenergie zu versorgenden Flugzeugsystems kühle Umgebungsluft zuzuführen, befindet sich das Sperrventil vorzugsweise in seiner ersten Stellung. Im Bodenbetrieb des Flugzeugs, wenn mit Hilfe der weiteren Fördereinrichtung Umgebungsluft durch den ersten Stauluftkanalzweig des weiteren Stauluftkanals gefördert wird, um sie dem zu ventilierenden Flugzeugbereich zuzuführen, befindet sich das Sperrventil dagegen vorzugsweise in seiner zweiten Stellung, in der es den zweiten Stauluftkanalzweig des weiteren Stauluftkanals verschließt. Dadurch wird eine Luftzirkulation zwischen dem ersten und dem zweiten Stauluftkanalzweig des weiteren Stauluftkanals verhindert.

Vorzugsweise sind bei dem erfindungsgemäßen Ventilationssystem der weitere Wärmetauscher, das von dem weiteren Wärmetauscher mit Kühlenergie zu versorgende Flugzeugsystem, der Lufteinlass des weiteren Stauluftkanals und der zweite Stauluftkanalzweig des weiteren Stauluftkanals so ausgelegt und dimensioniert, dass die Ventilation des zu ventilierenden Flugzeugbereichs durch die Erwärmung der über den zweiten Stauluftkanalzweig des weiteren Stauluftkanals zugeführten Luft beim Durchströmen des weiteren Wärmetauschers nicht beeinträchtigt wird. Dadurch wird gewährleistet, dass die Luft selbst nach dem Durchströmen des weiteren Wärmetauschers noch zur Ventilierung des zu ventilierenden Flugzeugbereichs genutzt werden kann. Beispielsweise können die oben genannten Komponenten so ausgelegt und dimensioniert sein, dass die Luft beim Durchströmen des weiteren Wärmetauschers nicht über 80°C erwärmt wird. Die hier genannte Maximaltemperatur von 80°C wird durch die Anforderungen der Flugzeugstruktur sowie des zu ventilierenden Flugzeugbereichs festgelegt. In Abhängigkeit des Strukturmaterials und der Bedingungen in dem zu ventilierenden Flugzeugbereich kann diese Temperatur jedoch auch unter oder über 80°C liegen.

Die weitere Versorgungsleitung des erfindungsgemäßen Ventilationssystems kann einen mit einem Flügelwurzelbereich des Flugzeugs verbindbaren ersten Zweig und einen mit der Belly Fairing des Flugzeugs verbindbaren zweiten Zweig umfassen.

Die mit dem Stauluftkanal verbundene Versorgungsleitung kann mit der mit dem weiteren Stauluftkanal verbundenen weiteren Versorgungsleitung verbunden sein. Beispielsweise ist eine Anordnung möglich, bei der der zweite Zweig der Versorgungsleitung mit einem zweiten Zweig der weiteren Versorgungsleitung verbunden ist, wobei sowohl der zweite Zweig der Versorgungsleitung als auch der zweite Zweig der weiteren Versorgungsleitung der Belly Fairing des Flugzeugs Ventilationstuft zuführen.

Um bei einer derartigen Anordnung eine unerwünschte Luftzirkulation zwischen der Versorgungsleitung und der weiteren Versorgungsleitung zu verhindern, ist in der mit dem Stauluftkanal verbundenen Versorgungsleitung und der mit dem weiteren Stauluftkanal verbundenen weiteren Versorgungsleitung vorzugsweise jeweils ein Sperrventil angeordnet. Die Sperrventile sind jeweils dazu eingerichtet, in einer ersten Stellung die Versorgungsleitung bzw. die weitere Versorgungsleitung zur Durchströmung freizugeben. In einer zweiten Stellung verschließen die Sperrventile dagegen die Versorgungsleitung bzw. die weitere Versorgungsleitung.

Eine bevorzugte Ausführungsform der Erfindung wird nun anhand der beigefügten schematischen Zeichnungen näher erläutert, von denen
- Figur 1: eine erste Ausführungsform eines Systems zur Ventilation eines Flugzeugbereichs zeigt, und
- Figur 2: eine weitere Ausführungsform eines Systems zur Ventilation eines Flugzeugbereichs zeigt.

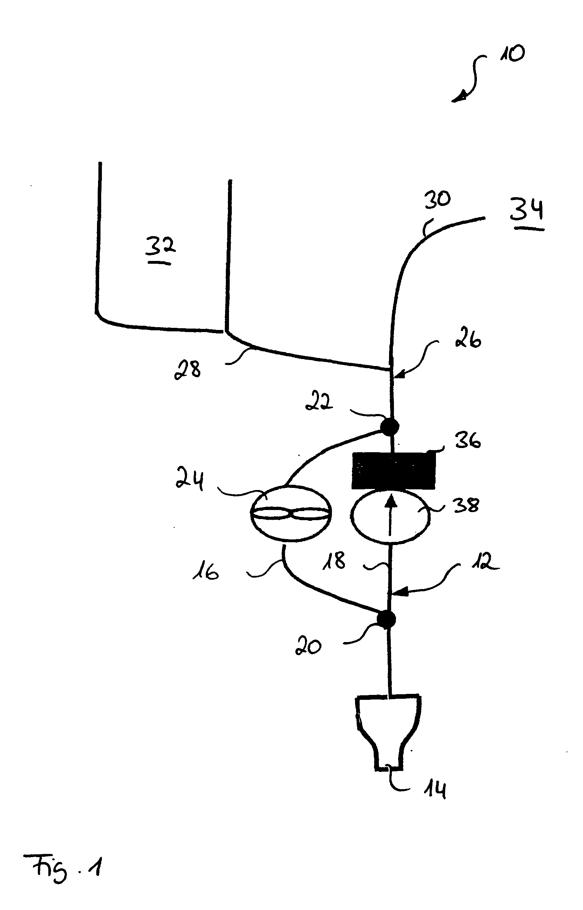

Ein in Figur 1 dargestelltes Ventilationssystem 10 umfasst einen Stauluftkanal 12, der einen in Form eines NACA-Einlasses ausgebildeten Lufteinlass 14 umfasst. Durch den Lufteinlass 14 ist Umgebungsluft in den Stauluftkanal 12 zuführbar. Der Stauluftkanal 12 weist einen ersten Stauluftkanalzweig 16 sowie einen parallel zu dem ersten Stauluftkanalzweig 16 durchströmbaren zweiten Stauluftkanalzweig 18 auf. Der erste Stauluftkanalzweig 16 zweigt an einem stromabwärts des Lufteinlasses 14 angeordneten Verzweigungspunkt 20 von dem zweiten Stauluftkanalzweig 18 ab. An einem Mündungspunkt 22 mündet der zweite Stauluftkanalzweig 18 dagegen wieder in den ersten Stauluftkanalzweig 16. Folglich weist der Stauluftkanal 12 lediglich über einen Teil seiner Länge zwei parallel durchströmbare Zweige 16, 18 auf.

In dem ersten Stauluftkanalzweig 16 ist eine in Form eines Gebläses ausgebildete Fördereinrichtung 24 angeordnet. Während der Stauluftkanal 12 im Flugbetrieb des Flugzeugs aufgrund des sich in dem Stauluftkanal 12 gegenüber dem Umgebungsdruck aufbauenden Staudrucks von Umgebungsluft durchströmt wird, sorgt im Bodenbetrieb des Flugzeugs die Fördereinrichtung 24 für eine Strömung von Umgebungsluft durch den ersten Stauluftkanalzweig 16.

Stromabwärts des Mündungspunkts 22 des ersten Stauluftkanalzweigs 16 in den zweiten Stauluftkanalzweig 18 ist der Stauluftkanal 12 mit einer Versorgungsleitung 26 verbunden. Die Versorgungsleitung 26 weist einen ersten Zweig 28 sowie einen zweiten Zweig 30 auf. Der erste Zweig 28 der Versorgungsleitung 26 ist mit einem in Flugrichtung des Flugzeugs linken Flügelwurzelbereich 32 des Flugzeugs verbunden, um dem Flügelwurzelbereich 32 des Flugzeugs sowohl im Bodenbetrieb als auch im Flugbetrieb des Flugzeugs Ventilationsluft zuzuführen. Der zweite Zweig 30 der Versorgungsleitung 26 ist dagegen mit einer Belly Fairing 34 des Flugzeugs verbunden, um der Belly Fairing 34 sowohl im Bodenbetrieb als auch im Flugbetrieb des Flugzeugs Ventilationsluft zuzuführen.

In dem zweiten Stauluftkanalzweig 18 ist stromabwärts von dem Verzweigungspunkt 20 und stromaufwärts von dem Mündungspunkt 22 ein Wärmetauscher 36 angeordnet. Der Wärmetauscher 36 dient dazu, ein Flugzeugsystem, das lediglich im Flugbetrieb des Flugzeugs, d.h. nur dann, wenn das Flugzeug bereits eine gewisse Mindestfluggeschwindigkeit erreicht hat, Kühlbedarf hat, Kühlenergie zuzuführen. Beispielsweise kann der Wärmetauscher 36 dazu dienen, ein Sauerstofferzeugungssystem oder ein Inertgaserzeugungssystem des Flugzeugs mit Kühlenergie zu versorgen.

Aufgrund der Anordnung des Wärmetauschers 36 in dem zweiten Stauluftkanalzweig 18 muss die Fördereinrichtung 24 im Bodenbetrieb des Flugzeugs keine Luft durch den Wärmetauscher 36 fördern. Infolgedessen ist es auch nicht erforderlich, dass die Fördereinrichtung 24 so ausgelegt ist, dass sie dazu in der Lage ist, einen durch den Wärmetauscher 36 verursachten Druckabfall zu kompensieren.

Im Flugbetrieb des Flugzeugs bewirkt dagegen der sich in dem Stauluftkanal 12 gegenüber dem Umgebungsdruck aufbauende Staudruck eine ausreichende Luftströmung durch den Stauluftkanal 12. Da der Lufteinlass 14 des Stauluftkanals 12 so dimensioniert ist, dass im Bodenbetrieb des Flugzeugs eine ausreichende Zufuhr von Ventilationsluft in die zu ventilierenden Flugzeugbereiche 32, 34 gewährleistet ist, ist im Flugbetrieb des Flugzeugs ohnehin ein "überschüssiger" Luftmassenstrom vorhanden. Dieser kann in energetisch optimaler Weise zur Versorgung des in dem zweiten Stauluftkanalzweig 18 angeordneten Wärmetauschers 36 mit Kühlenergie genutzt werden.

In dem zweiten Stauluftkanalzweig 18 Ist stromaufwärts des Wärmetauschers 36 ein Sperrventil 38 angeordnet. Alternativ dazu könnte das Sperrventil 38 jedoch auch stromabwärts des Wärmetauschers 36 positioniert sein. In einer ersten Stellung gibt das Sperrventil 38 den zweiten Stauluftkanalzweig 18 zur Durchströmung frei. In einer zweiten Stellung verschließt das Sperrventil 38 dagegen den zweiten Stauluftkanalzweig 18. Im Bodenbetrieb des Flugzeugs, d.h. dann, wenn mit Hilfe der Fördereinrichtung 24 Umgebungsluft durch den Stauluftkanal 12 gefördert wird, befindet sich das Sperrventil 38 in seiner den zweiten Stauluftkanalzweig 18 verschließenden zweiten Stellung, so dass eine Luftzirkulation zwischen dem ersten Stauluftkanalzweig 16 und dem zweiten Stauluftkanalzweig 18 vermieden wird.

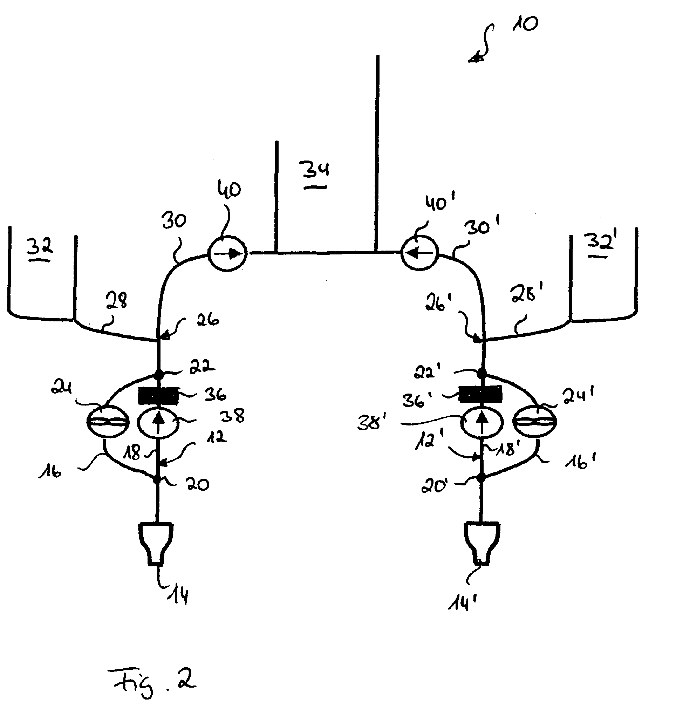

Das in Figur 2 dargestellte Ventilationssystem 10 unterscheidet sich von der in Figur 1 dargestellten Anordnung dadurch, dass sie einen weiteren Stauluftkanal 12' mit einem Lufteinlass 14', einem ersten Stauluftkanalzweig 16' und einem parallel zu dem ersten Stauluftkanalzweig 16' durchströmbaren zweiten Stauluftkanalzweig 18' umfasst. Eine mit dem weiteren Stauluftkanal 12' verbundene weitere Versorgungsleitung 26' umfasst einen ersten Zweig 28' sowie einen zweiten Zweig 30'. Der erste Zweig 28' der weiteren Versorgungsleitung 26' ist mit einem in Flugrichtung des Flugzeugs rechten Flügelwurzelbereich 32' des Flugzeugs verbunden und führt dem rechten Flügelwurzelbereich 32' sowohl im Bodenbetrieb als auch im Flugbetrieb des Flugzeugs den weiteren Stauluftkanal 12' durchströmende Umgebungsluft zu. Der zweite Zweig 30' der weiteren Versorgungsleitung 26' ist dagegen mit dem zweiten Zweig 30 der Versorgungsleitung 26 verbunden und führt, ebenso wie der zweite Zweig 30 der Versorgungsleitung 26, der Belly Fairing 34 des Flugzeugs sowohl im Bodenbetrieb als auch im Flugbetrieb des Flugzeugs Umgebungsluft zu.

In dem ersten Stauluftkanalzweig 16' des weiteren Stauluftkanals 12' ist eine weitere Fördereinrichtung 24' angeordnet. Ein in dem zweiten Stauluftkanalzweig 18' des weiteren Stauluftkanal 12' angeordnetes Sperrventil 38' verhindert in seiner Schließstellung eine Luftzirkulation zwischen dem ersten Stauluftkanalzweig 16' und dem zweiten Stauluftkanalzweig 18' des weiteren Stauluftkanals 12'. In der Figur 2 ist das Sperrventil 38' stromaufwärts des weiteren Wärmetauschers 36' angeordnet, es könnte jedoch auch stromabwärts des weiteren Wärmetauschers 36' positioniert sein. Sperrventile 40, 40', die in dem zweiten Zweig 30 der Versorgungsleitung 26 und in dem zweiten Zweig 30' der weiteren Versorgungsleitung 26' angeordnet sind, verhindern in ihrer Schließstellung eine Luftzirkulation zwischen der Versorgungsleitung 26 und der weiteren Versorgungsleitung 26'.

In der in der Figur 2 dargestellten Ausführungsform eines Ventilationssystems 10 ist in dem zweiten Stauluftkanalzweig 18' des weiteren Stauluftkanals 12' ein weiterer Wärmetauscher 36' angeordnet, der ein Flugzeugsystem, beispielsweise ein Sauerstofferzeugungssystem oder ein Inertgaserzeugungssystem mit Kühlenergie versorgt. Alternativ zur der Anordnung gemäß Figur 2 kann jedoch auch nur in dem zweiten Stauluftkanalzweig 18 des Stauluftkanals 12 oder dem zweiten Stauluftkanalzweig 18' des weiteren Stauluftkanals 12' ein Wärmetauscher angeordnet sein. Der Wärmetauscher 36 und der weitere Wärmetauscher 36' können dasselbe Flugzeugsystem mit Kühlenergie versorgen. Alternativ dazu können der Wärmetauscher 36 und der weitere Wärmetauscher 36' jedoch auch unterschiedlichen Flugzeugsystemen zugeordnet sein.

## Patentansprüche

1. System (10) zur Ventilation eines Flugzeugbereichs (32, 34) mit
- einem Stauluftkanal (12), der einen Lufteinlass (14), einen ersten Stauluftkanalzweig (16) sowie einen parallel zu dem ersten Stauluftkanalzweig (16) durchströmbaren zweiten Stauluftkanalzweig (18) umfasst,
- einer mit dem Stauluftkanal (12) verbundenen Versorgungsleitung (26), die dazu eingerichtet ist, dem zu ventilierenden Flugzeugbereich (32, 34) den Stauluftkanal (12) durchströmende Luft zuzuführen, und
- einer in dem ersten Stauluftkanalzweig (16) angeordneten Fördereinrichtung (24), **dadurch gekennzeichnet, dass** in dem zweiten Stauluftkanalzweig (18) ein Wärmetauscher (36) eines mit Kühlenergie zu versorgenden Flugzeugsystems angeordnet ist.

2. Ventilationssystem nach Anspruch 1,
**dadurch gekennzeichnet, dass** das mit Kühlenergie zu versorgende Flugzeugsystem ein Sauerstofferzeugungssystem oder ein Inertgaserzeugungssystem ist.

3. Ventilationssystem nach Anspruch 1 oder 2,
**dadurch gekennzeichnet, dass** der erste Stauluftkanalzweig (16) an einem stromabwärts des Lufteinlasses (14) angeordneten Verzweigungspunkt (20) von dem zweiten Stauluftkanalzweig (18) abzweigt und an einem stromabwärts der Fördereinrichtung (24) angeordneten Mündungspunkt (22) wieder in den zweiten Stauluftkanalzweig (18) mündet.

4. Ventilationssystem nach Anspruch 3,
**dadurch gekennzeichnet, dass** der Wärmetauscher (36) zwischen dem Verzweigungspunkt (20) und dem Mündungspunkt (22) angeordnet ist und/oder dass die Versorgungsleitung (26) stromabwärts des Mündungspunkts (22) mit dem Stauluftkanal (12) verbunden ist.

5. Ventilationssystem nach einem der vorhergehenden Ansprüche,
**dadurch gekennzeichnet, dass** in dem zweiten Stauluftkanalzweig (18) stromaufwärts oder stromabwärts des Wärmetauschers (36) ein Sperrventil (38) angeordnet ist.

6. Ventilationssystem nach einem der vorhergehenden Ansprüche,
**dadurch gekennzeichnet, dass** der Wärmetauscher (36), das von dem Wärmetauscher (36) mit Kühlenergie zu versorgende Flugzeugsystem, der Lufteinlass (14) und der zweite Stauluftkanalzweig (18) so ausgelegt und dimensioniert sind, dass die Ventilation des zu ventilierenden Flugzeugbereichs (32, 34) durch die Erwärmung der über den zweiten Stauluftkanalzweig (18) zugeführten Luft beim Durchströmen des Wärmetauschers (36) nicht beeinträchtigt wird.

7. Ventilationssystem nach einem der vorhergehenden Ansprüche,
**dadurch gekennzeichnet, dass** die Versorgungsleitung (26) einen mit einem Flügelwurzelbereich (32) des Flugzeugs verbindbaren ersten Zweig (28) und einen mit einem Belly Fairing (34) des Flugzeugs verbindbaren zweiten Zweig (30) umfasst.

8. Ventilationssystem nach einem der vorhergehenden Ansprüche, **gekennzeichnet durch**:
- einen weiteren Stauluftkanal (12'), der einen Lufteinlass (14'), einen ersten Stauluftkanalzweig (16') sowie einen parallel zu dem ersten Stauluftkanalzweig (16') durchströmbaren zweiten Stauluftkanalzweig (18') umfasst,
- eine mit dem weiteren Stauluftkanal (12') verbundene weitere Versorgungsleitung (26'), die dazu eingerichtet ist, einem zu ventilierenden Flugzeugbereich (32', 34) den weiteren Stauluftkanal (12') durchströmende Luft zuzuführen, und
- eine in dem ersten Stauluftkanalzweig (16') angeordnete weitere Fördereinrichtung (24').

9. Ventilationssystem nach Anspruch 8,
**dadurch gekennzeichnet, dass** in dem zweiten Stauluftkanalzweig (18') des weiteren Stauluftkanals (12') ein weiterer Wärmetauscher (36') eines mit Kühlenergie zu versorgenden Flugzeugsystems angeordnet ist.

10. Ventilationssystem nach Anspruch 9,
**dadurch gekennzeichnet, dass** der erste Stauluftkanalzweig (16') des weiteren Stauluftkanals (12') an einem stromabwärts des Lufteinlasses (14') angeordneten Verzweigungspunkt (20') von dem zweiten Stauluftkanalzweig (18') des weiteren Stauluftkanals (12') abzweigt und an einem stromabwärts der weiteren Fördereinrichtung (24') angeordneten Mündungspunkt (22') wieder in den zweiten Stauluftkanalzweig (18') mündet, wobei der weitere Wärmetauscher (36') zwischen dem Verzweigungspunkt (20') und dem Mündungspunkt (22') angeordnet ist.

11. Ventilationssystem nach Anspruch 10,
**dadurch gekennzeichnet, dass** die weitere Versorgungsleitung (26') stromabwärts des Mündungspunkts (22') mit dem weiteren Stauluftkanal (12') verbunden ist.

12. Ventilationssystem nach einem der Ansprüche 9 bis 11,
**dadurch gekennzeichnet, dass** in dem zweiten Stauluftkanalzweig (18') des weiteren Stauluftkanals (12') stromaufwärts oder stromabwärts des weiteren Wärmetauschers (36') ein Sperrventil (38') angeordnet ist und/oder dass der weitere Wärmetauscher (36'), das von dem weiteren Wärmetauscher (36') mit Kühlenergie zu versorgende Flugzeugsystem, der Lufteinlass (14') des weiteren Stauluftkanals (12') und der zweite Stauluftkanalzweig (18') des weiteren Stauluftkanals (12') so ausgelegt und dimensioniert sind, dass die Ventilation des zu ventilierenden Flugzeugbereichs (32', 34) durch die Erwärmung der über den zweiten Stauluftkanalzweig (18') des weiteren Stauluftkanals (12') zugeführten Luft beim Durchströmen des weiteren Wärmetauschers (36') nicht beeinträchtigt wird.

13. Ventilationssystem nach einem der Ansprüche 8 bis 12,
**dadurch gekennzeichnet, dass** die weitere Versorgungsleitung (26') einen mit einem Flügelwurzelbereich (32') des Flugzeugs verbindbaren ersten Zweig (28') und einen mit dem Belly Fairing (34) des Flugzeugs verbindbaren zweiten Zweig (30') umfasst.

14. Ventilationssystem nach einem der Ansprüche 8 bis 13,
**dadurch gekennzeichnet, dass** die mit dem Stauluftkanal (12) verbundene Versorgungsleitung (26) mit der mit dem weiteren Stauluftkanal (12') verbundenen weiteren Versorgungsleitung (26') verbunden ist.

15. Ventilationssystem nach Anspruch 14,
**dadurch gekennzeichnet, dass** in der mit dem Stauluftkanal (12) verbundenen Versorgungsleitung (26) und der mit dem weiteren Stauluftkanal (12') verbundenen weiteren Versorgungsleitung (26') jeweils ein Sperrventil (40, 40') angeordnet ist.

## Claims

1. System (10) for ventilation of an aircraft area (32, 34) comprising
- a ram-air duct (12), which comprises an air inlet (14), a first ram-air duct branch (16) as well as a second ram-air duct branch (18) allowing for being flowed parallel to the first ram-air duct branch (16),
- a supply line (26), which is connected to the ram-air duct (12) and which is adapted to supply air flowing through the ram-air duct (12) to the aircraft area (32, 34) to be ventilated, and
- a conveying device (24) arranged in the first ram-air duct branch (16), **characterized in that** in the second ram-air duct branch (18) a heat exchanger (36) of an aircraft system to be supplied with cooling energy is arranged.

2. Ventilation system according to claim 1,
**characterized in that** the aircraft system to be supplied with cooling energy is an oxygen generating system or an inert-gas generating system.

3. Ventilation system according to claim 1 or 2,
**characterized in that** the first ram-air duct branch (16) branches off from the second ram-air duct branch (18) at a branching point (20) arranged downstream of the air inlet (14) and runs back into the second ram-air duct branch (18) at a debouchment point (22) arranged downstream of the conveying device (24).

4. Ventilation system according to claim 3,
**characterized in that** the heat exchanger (36) is arranged between the branching point (20) and the debouchment point (22), and/or **in that** the supply line (26) is connected downstream of the debouchment point (22) to the ram-air duct (12).

5. Ventilation system according to one of the preceding claims,
**characterized in that** in the second ram-air duct branch (18) a shut-off valve (38) is arranged upstream or downstream of the heat exchanger (36).

6. Ventilation system according to one of the preceding claims,
**characterized in that** the heat exchanger (36), the aircraft system to be supplied with cooling energy by the heat exchanger (36), the air inlet (14) and the second ram-air duct branch (18) are designed and dimensioned such that the ventilation of the aircraft area (32, 34) to be ventilated is not impaired by the heating of the air supplied through the second ram-air duct branch (18) as it flows through the heat exchanger (36).

7. Ventilation system according to one of the preceding claims,
**characterized in that** the supply line (26) comprises a first branch (28) connectable to a wing root area (32) of the aircraft and a second branch (30) connectable to a belly fairing (34) of the aircraft.

8. Ventilation system according to one of the preceding claims,
**characterized by**:
- a further ram-air duct (12'), which comprises an air inlet (14'), a first ram-air duct branch (16') as well as a second ram-air duct branch (18') allowing for being flowed parallel to the first ram-air duct branch (16'),
- a further supply line (26'), which is connected to the further ram-air duct (12') and which is adapted to supply air flowing through the further ram-air duct (12') to an aircraft area (32', 34) to be ventilated, and
- a further conveying device (24') arranged in the first ram-air duct branch (16').

9. Ventilation system according to claim 8,
**characterized in that** in the second ram-air duct branch (18') of the further ram-air duct (12') a further heat exchanger (36') of an aircraft system to be supplied with cooling energy is arranged.

10. Ventilation system according to claim 9,
**characterized in that** the first ram-air duct branch (16') of the further ram-air duct (12') branches off from the second ram-air duct branch (18') of the further ram-air duct (12') at a branching point (20') arranged downstream of the air inlet (14') and runs back into the second ram-air duct branch (18') at a debouchment point (22') arranged downstream of the further conveying device (24'), wherein the further heat exchanger (36') is arranged between the branching point (20') and the debouchment point (22').

11. Ventilation system according to claim 10,
**characterized in that** the further supply line (26') is connected downstream of the debouchment point (22') to the further ram-air duct (12').

12. Ventilation system according to one of claims 9 to 11,
**characterized in that** in the second ram-air duct branch (18') of the further ram-air duct (12') a shut-off valve (38') is arranged upstream or downstream of the further heat exchanger (36'), and/or **in that** the further heat exchanger (36'), the aircraft system to be supplied with cooling energy by the further heat exchanger (36'), the air inlet (14') of the further ram-air duct (12') and the second ram-air duct branch (18') of the further ram-air duct (12') are designed and dimensioned such that the ventilation of the aircraft area (32', 34) to be ventilated is not impaired by the heating of the air supplied through the second ram-air duct branch (18') of the further ram-air duct (12') as it flows through the further heat exchanger (36').

13. Ventilation system according to one of claims 8 to 12,
**characterized in that** the further supply line (26') comprises a first branch (28') connectable to a wing root area (32') of the aircraft and a second branch (30') connectable to the belly fairing (34) of the aircraft.

14. Ventilation system according to one of claims 8 to 13,
**characterized in that** the supply line (26) connected to the ram-air duct (12) is connected to the further supply line (26') connected to the further ram-air duct (12').

15. Ventilation system according to claim 14,
**characterized in that** a shut-off valve (40, 40') is arranged in each case in the supply line (26) connected to the ram-air duct (12) and in the further supply line (26') connected to the further ram-air duct (12').

## Revendications

1. Système (10) pour la ventilation d'une zone d'avion (32, 34) comprenant :
- un conduit d'air dynamique (12) comportant une entrée d'air (14), un premier embranchement de conduit d'air dynamique (16), ainsi qu'un deuxième embranchement de conduit d'air dynamique (18) pouvant être traversé par l'écoulement en parallèle au premier embranchement de conduit d'air dynamique (16),
- une conduite d'alimentation (26) reliée au conduit d'air dynamique (12), qui est configurée de manière à amener à la zone d'avion à ventiler (32, 34) l'air s'écoulant à travers le conduit d'air dynamique (12), et
- un dispositif de refoulement (24) agencé dans le premier embranchement de conduit d'air dynamique (16),
**caractérisé en ce que** dans le deuxième embranchement de conduit d'air dynamique (18) est agencé un échangeur de chaleur (36) d'un système de l'avion devant être alimenté en énergie de refroidissement.

2. Système de ventilation selon la revendication 1,
**caractérisé en ce que** le système de l'avion devant être alimenté en énergie de refroidissement, est un système de production d'oxygène ou un système de production de gaz inerte.

3. Système de ventilation selon la revendication 1 ou la revendication 2, **caractérisé en ce que** le premier embranchement de conduit d'air dynamique (16) est dérivé du deuxième embranchement de conduit d'air dynamique (18) en un point de dérivation (20) agencé en aval de l'entrée d'air (14), et débouche à nouveau dans le deuxième embranchement de conduit d'air dynamique (18) en un point d'embouchure (22) agencé en aval du dispositif de refoulement (24).

4. Système de ventilation selon la revendication 3,
**caractérisé en ce que** l'échangeur de chaleur (36) est agencé entre le point de dérivation (20) et le point d'embouchure (22) et/ou **en ce que** la conduite d'alimentation (26) est reliée au conduit d'air dynamique (12) en aval du point d'embouchure (22).

5. Système de ventilation selon l'une des revendications précédentes,
**caractérisé en ce que**, en amont ou en aval de l'échangeur de chaleur (36), une vanne d'arrêt (38) est agencée dans le deuxième embranchement de conduit d'air dynamique (18).

6. Système de ventilation selon l'une des revendications précédentes,
**caractérisé en ce que** l'échangeur de chaleur (36), le système de l'avion devant être alimenté en énergie de refroidissement par l'échangeur de chaleur (36), l'entrée d'air (14) et le deuxième embranchement de conduit d'air dynamique (18) sont configurés et dimensionnés de façon telle, que la ventilation de la zone d'avion à ventiler (32, 34) ne soit pas altérée par l'échauffement de l'air amené par l'intermédiaire du deuxième embranchement de conduit d'air dynamique (18) lors de l'écoulement à travers l'échangeur de chaleur (36).

7. Système de ventilation selon l'une des revendications précédentes,
**caractérisé en ce que** la conduite d'alimentation (26) comprend un premier embranchement (28) pouvant être relié à une zone d'emplanture d'aile (32) de l'avion, et un deuxième embranchement (30) pouvant être relié à un carénage ventral (34) de l'avion.

8. Système de ventilation selon l'une des revendications précédentes, **caractérisé par** :
- un autre conduit d'air dynamique supplémentaire (12') comportant une entrée d'air (14'), un premier embranchement de conduit d'air dynamique (16'), ainsi qu'un deuxième embranchement de conduit d'air dynamique (18') pouvant être traversé par l'écoulement en parallèle au premier embranchement de conduit d'air dynamique (16'),
- une autre conduite d'alimentation supplémentaire (26') reliée à l'autre conduit d'air dynamique supplémentaire (12'), qui est configurée de manière à amener à une zone d'avion à ventiler (32', 34), l'air s'écoulant à travers ledit autre conduit d'air dynamique supplémentaire (12'), et
- un autre dispositif de refoulement supplémentaire (24') agencé dans le premier embranchement de conduit d'air dynamique (16').

9. Système de ventilation selon la revendication 8,
**caractérisé en ce que** dans le deuxième embranchement de conduit d'air dynamique (18') dudit autre conduit d'air dynamique supplémentaire (12'), est agencé un autre échangeur de chaleur supplémentaire (36') d'un système de l'avion devant être alimenté en énergie de refroidissement.

10. Système de ventilation selon la revendication 9,
**caractérisé en ce que** le premier embranchement de conduit d'air dynamique (16') dudit autre conduit d'air dynamique supplémentaire (12') est dérivé du deuxième embranchement de conduit d'air dynamique (18') dudit autre conduit d'air dynamique supplémentaire (12'), en un point de dérivation (20') agencé en aval de l'entrée d'air (14'), et débouche à nouveau dans le deuxième embranchement de conduit d'air dynamique (18') en un point d'embouchure (22') agencé en aval dudit autre dispositif de refoulement supplémentaire (24'), ledit autre échangeur de chaleur supplémentaire (36') étant agencé entre le point de dérivation (20') et le point d'embouchure (22').

11. Système de ventilation selon la revendication 10,
**caractérisé en ce que** ladite autre conduite d'alimentation supplémentaire (26') est reliée à l'autre conduit d'air dynamique supplémentaire (12') en aval du point d'embouchure (22').

12. Système de ventilation selon l'une des revendications 9 à 11,
**caractérisé en ce que**, en amont ou en aval dudit autre échangeur de chaleur supplémentaire (36'), une vanne d'arrêt (38') est agencée dans le deuxième embranchement de conduit d'air dynamique (18') dudit autre conduit d'air dynamique supplémentaire (12') et/ou **en ce que** ledit autre échangeur de chaleur supplémentaire (36'), le système de l'avion devant être alimenté en énergie de refroidissement par ledit autre échangeur de chaleur supplémentaire (36'), l'entrée d'air (14') dudit autre conduit d'air dynamique supplémentaire (12') et le deuxième embranchement de conduit d'air dynamique (18') dudit autre conduit d'air dynamique supplémentaire (12') sont configurés et dimensionnés de façon telle, que la ventilation de la zone d'avion à ventiler (32', 34) ne soit pas altérée par l'échauffement de l'air amené par l'intermédiaire du deuxième embranchement de conduit d'air dynamique (18') dudit autre conduit d'air dynamique supplémentaire (12') lors de l'écoulement à travers ledit autre échangeur de chaleur supplémentaire (36').

13. Système de ventilation selon l'une des revendications 8 à 12,
**caractérisé en ce que** ladite autre conduite d'alimentation supplémentaire (26') comprend un premier embranchement (28') pouvant être relié à une zone d'emplanture d'aile (32') de l'avion, et un deuxième embranchement (30') pouvant être relié au carénage ventral (34) de l'avion.

14. Système de ventilation selon l'une des revendications 8 à 13,
**caractérisé en ce que** la conduite d'alimentation (26) reliée au conduit d'air dynamique (12) est reliée à ladite autre conduite d'alimentation supplémentaire (26') reliée à l'autre conduit d'air dynamique supplémentaire (12').

15. Système de ventilation selon la revendication 14,
**caractérisé en ce que** dans la conduite d'alimentation (26) reliée au conduit d'air dynamique (12) et dans ladite autre conduite d'alimentation supplémentaire (26') reliée à l'autre conduit d'air dynamique supplémentaire (12'), est respectivement agencée une vanne d'arrêt (40, 40').
